# EUROPEAN PATENT APPLICATION

(11) **EP 4 570 407 A1**
(43) Date of publication of application: **18.06.2025**
(21) Application number: 23217141.3
(22) Date of filing: 15.12.2023
(51) Int. Cl.: B23G 5/06

(54) **THREAD CUTTING TAP**

(71) Applicant: WALTER AG, 72072 Tübingen (DE)
(72) Inventor: Haubold, Jochen, 72072 Tübingen (DE)
(74) Representative: Sandvik

(57) **Abstract**

A thread cutting tap for metal cutting, comprising an elongate main body, which comprises a cutting section (4) which extends axially rearward from the front end (1). The cutting section (4) comprises a cutting unit, which comprises an axially extending chip flute (5), an axially extending land (6), which, in the rotational direction (7) connects to and is trailing the chip flute (5), and a set of axially spaced teeth. Each tooth of the set extends from the chip flute (5) rotationally rearward across the land (6), and comprises a first flank (11) facing in a first axial direction, which intersects the chip flute (5) with a first flank edge (14); a second flank (13) facing in a second axial direction opposite to the first axial direction, which intersects the chip flute (5) with a second flank edge (16); and a radially outward facing crest (12), which crest connects to both the flanks (11, 13) and intersects the chip flute (5) with a crest edge (15). The set of teeth comprises a plurality of incomplete teeth (18) which each has a crest cutting edge (15) formed by at least a portion of the crest edge. Each incomplete tooth (18) of the plurality of incomplete teeth (18) comprises a first flank cutting edge formed by at least a portion of the first flank edge (14); and a second flank non-cutting edge formed by the entire second flank edge (16).

## Description

### Technical field

The present invention relates to a thread cutting tap for metal cutting.

### Background form

Metal components comprising cooperating elements in form of one element with an internal thread and one element with an external thread, such as for example screw connections, are used in many various fields. Consequently, a variety of different cutting tools for providing a metal workpiece with an internal thread have been developed, and in particular, thread cutting taps. Such taps are conventionally provided with a thread that forms a helix along an axis of rotation of an elongated body. The thread is interrupted by axially extending chip flutes such that the helical thread presents a number of cutting edges at each intersection with each chip flute. Consecutive cutting edges along the interrupted helical thread are typically located further radially outward the further axially rearward they are located.

A known process for providing a metal workpiece with an internal thread is to first pre-drill a hole in the workpiece with a conventional drill tool. Thereafter, the thread cutting tap is inserted into the pre-drilled hole. The thread cutting tap is then rotated and pushed axially forward, wherein the cutting edges remove material from the inner surface of the pre-drilled hole. Thereby, consecutive teeth along the interrupted helical thread cut further and further into the inner surface so that the internal thread is gradually cut.

A problem with prior art thread cutting taps is that, during cutting of an internal thread in a pre-drilled hole, they have in some applications a tendency to be drawn into or pushed out of the pre-drilled hole. Thereby, the cut thread becomes too large.

### Summary

It is an object of the present invention to mitigate the shortcomings of the prior art and to provide a thread cutting tap for metal cutting that improves tolerances of the thread cut therewith. This object is achieved according to the invention by means of a thread cutting tap according to claim 1.

The present invention relates to a thread cutting tap for metal cutting, comprising an elongate main body, which
- has a front end, a rear end and a central longitudinal axis extending from the front end to the rear end,
- is configured rotatable in a direction of rotation around the central longitudinal axis, and
- comprises a cutting section which extends axially rearward from the front end,

wherein the cutting section comprises a cutting unit, which comprises
   - an axially extending chip flute,
   - an axially extending land, which, in the rotational direction connects to and is trailing the chip flute, and
   - a set of axially spaced teeth, wherein each tooth of the set extends from the chip flute rotationally rearward across the land, and comprises
      - a first flank facing in a first axial direction, which first flank intersects the chip flute with a first flank edge,
      - a second flank facing in a second axial direction opposite to the first axial direction, which second flank intersects the chip flute with a second flank edge,
      - a radially outward facing crest, which crest connects to both the flanks and intersects the chip flute with a crest edge,
wherein the set of teeth comprises
   - a plurality of incomplete teeth which each has a crest cutting edge formed by at least a portion of the crest edge,
wherein each incomplete tooth of the plurality of incomplete teeth comprises
   - a first flank cutting edge formed by at least a portion of the first flank edge, and
   - a second flank non-cutting edge formed by the entire second flank edge.

Thus, the inventive thread cutting tap comprises a set of incomplete teeth, which each have a crest cutting edge. During operation, the crest cutting edges cut material radially inward in a workpiece. Thereby, a thread groove, for example a helical thread groove, is formed in the workpiece and the material left between the turns of the helical thread groove form the internal thread.

Furthermore, the incomplete teeth each have a first flank cutting edge and a second flank non-cutting edge, wherein the first and second flanks face in opposite axial directions. Thus, each incomplete tooth has a cutting edge at a forwardly facing flank, or, each incomplete tooth has cutting edge at rearwardly facing flank, while the edge of the other flank is non-cutting. Consequently, during operation, forces from the first flank cutting edges and the lack of cutting forces from the second non-cutting edges create a resulting force in an axial direction. This resulting force will act against forces that tend to pull the tool into or push the tool out of the pre-drilled hole also acting on the tool during operation. Thereby, it is possible to increase dimensional accuracy and decrease tolerances of the cut thread.

A thread cutting tap according to the present invention is suitable for cutting an internal thread in a metal workpiece by removing material from an internal surface in the workpiece, for example by cutting chips from the metal workpiece. Specifically, the present thread cutting tap is suitable to be operated in a pre-drilled hole in a workpiece, wherein the thread cutting tap has a larger outer diameter than the inner diameter of the pre-drilled hole.

The thread tap comprises an elongate main body having a front end, a rear end and a central longitudinal axis extending from the front end to the rear end. A radial direction is a direction perpendicular to the central longitudinal axis. The thread cutting tap is configured rotatable in a direction of rotation around the central longitudinal axis. During use, the axis of rotation is preferably a central axis of the pre-drilled hole in the workpiece. When operated, the thread cutting tap is preferably rotated around and advanced forward along the same central longitudinal axis. Preferably, the workpiece is of metal such as a ISO P material. The workpiece may for example be a component that is to be attached to another component by a fastener with an external thread, for example as screw, which is screwed into the threaded hole of the workpiece.

The main body of the thread cutting tap has a cutting section at a front end. Preferably, the cutting section is an axial length portion of the elongate body. According to an embodiment, the thread cutting tap comprises further sections, such as a coupling section at a rear end for providing a mounting interface. Optionally, the mounting interface is designed to be coupled to a rotatable machine spindle or to an adapter for a rotatable machine spindle. Preferably, the coupling section is included in a shaft that is integral with the main body.

The cutting section comprises a cutting unit, which comprises an axially extending chip flute and an axially extending land. The land is trailing the chip flute in the direction of rotation. Both the land and the chip flute have a rotationally leading edge and a rotationally trailing edge, wherein preferably the trailing edge of the chip flute is the leading edge of the land. Preferably, the cutting unit is an integral, one-piece portion of the main body in the cutting section.

The cutting unit further comprises a set of axially spaced teeth. Each tooth of the set of teeth extends from the chip flute rotationally rearward across the land. Thus, preferably each tooth is rotationally trailing the chip flute and extends rotationally behind the trailing edge of the chip flute/the leading edge of the land, optionally all the way to the trailing end of the land.

Preferably, the set of teeth, in the axial direction, are separated by grooves, in other words valleys, which extend in parallel with the teeth across the land. Each tooth comprises a crest, a first flank facing in a first axial direction, and a second flank facing in a second axial direction opposite to the first axial direction. Thus, the first flank faces in one of axially forward and axially rearward directions, and the second flank in the other axial direction. The first flank intersects the chip flute with a first flank edge, and the second flank intersects the chip flute with a second flank edge. The radially outward facing crest connects to both the flanks and intersects the chip flute with a crest edge.

The set of teeth comprises a plurality of incomplete teeth, which each has a crest cutting edge formed by at least a portion of the crest edge. Preferably, the crest cutting edge is formed by the entire crest edge.

Furthermore, each incomplete tooth has a first flank cutting edge formed by at least a portion of the first flank edge, and a second flank non-cutting edge formed by the entire second flank edge. Each cutting edge is arranged such that it contacts and removes material from the workpiece when the thread cutting tap is rotated and axially advanced during operation. Each non-cutting edge is arranged such that it does not remove material from the work piece when the thread cutting tap is rotated and axially advanced during operation. Optionally, the non-cutting edges contact the work piece for support and/or guidance of the thread cutting tap. Non-cutting edges are for example set back in relation to a cutting edge rotationally in front thereof. The cutting edges are all located on either a forward facing flank or a rearward facing flank, and create axial forces during operation that counter axial pull/push of the thread cutting tap. Thus, optionally, the first flank is an axially forward facing flank or an axially rearward facing flank.

The term incomplete tooth is to be understood as a tooth that is smaller than the maximal dimensions of thread grooves that can be cut with the thread cutting tap. Preferably, an incomplete tooth has a cutting edge that cuts the thread groove to a smaller dimension than a tooth that makes a final cut to the maximal dimensions. Typically, incomplete teeth are a few forward most of teeth of the cutting unit, for example 2 - 5 forward most teeth.

According to an embodiment, the crest cutting edge of an incomplete tooth is located further radially outward the further axially rearward the incomplete tooth is located. According to an embodiment, the incomplete teeth together form a chamfer of the cutting section. Specifically, each incomplete tooth has a crest that is inclined facing forward. An inclined crest cutting edge advantageously reduces the cutting load when the thread cutting tap enters a workpiece. Another advantage is that cutting forces are distributed more evenly over the cutting edge. Alternatively, the crest cutting edge has any other suitable shape, for example, is parallel with the longitudinal axis, convex or concave.

According to an embodiment, the thread cutting tap is configured for a radial cutting depth. A radial inward extension of each crest cutting edge is at most the radial cutting depth. The cutting depth corresponds to the thickness of chips being cut. Thus, a crest cutting edge preferably extends over a corner region/edge region and a small distance corresponding to the radial cutting depth inward along the flanks.

According to an embodiment, the plurality of teeth of the cutting section comprises, axially rearward of the incomplete teeth, a plurality of axially spaced complete teeth. The term complete tooth is to be understood as a tooth that corresponds to the maximal dimensions of thread grooves that can be cut with the thread cutting tap. Typically, only an axially and rotationally leading complete tooth has cutting edges, the remaining have only non-cutting edges and function mainly as guides and support. Preferably, the complete teeth have identical dimension and shape. The complete teeth are spaced at a constant main pitch.

The term pitch is to be understood as a distance from any point on a tooth of the cutting section to a corresponding point on the axially directly consecutive tooth, measured parallel to the axis. If nothing else is stated, axially directly consecutive teeth are teeth of the same cutting unit which are axially closest to each other.

According to an embodiment, axially between each two axially directly consecutive teeth of the set, a root surface connects a respective first flank with a respective second flank of the two axially directly consecutive teeth, which root surface has a radial distance to the central longitudinal axis 3. The radial distance of the root surface to the central longitudinal axis between each two axially consecutive teeth, which comprises at least one incomplete tooth, is equal. This simplifies grinding of flank edges on either side of a grinding wheel to a respective cutting and non-cutting edge. Preferably, the radial distance of the root surface axially between at least two axially directly consecutive complete teeth is the equal radial distance. Thereby, both the incomplete and the complete teeth can be ground with the same grinding wheel.

According to an embodiment, the second flank edges of each respective incomplete tooth are axially spaced at a constant second pitch. Preferably, the second pitch is equal to the main pitch. Thereby the non-cutting second flank edges of both the incomplete and complete teeth have the same pitch. This is beneficial for guidance and support of the thread cutting tap during operation.

According to an embodiment, the first flank cutting edge of each incomplete tooth has a first axial distance to an imaginary closest one of imaginary first flank edges, wherein the imaginary first flank edges are located in positions which are spaced according to the main pitch and are axially forward from the first flank edges of the complete teeth. The first axial distance decreases for each consecutive incomplete tooth axially rearward. In other words, the further axially rearward an incomplete tooth is located, the closer the first flank cutting edge is located to the position of a flank of a groove cut according to the maximum dimensions by the thread cutting tap. The positions of the imaginary first flank edges correspond the position of where a flank of a groove that is being cut would be located after it has been cut to the maximum dimensions of the thread cutting tap. According to the embodiment, it is ensured that each of the incomplete teeth have a second flank cutting edge that is able to cut and contribute to the desired, resulting axial force counteracting push/pull.

Preferably, the first flank edge of each incomplete tooth is spaced at a constant first pitch. Thus, the first axial distance decreases by the same amount form one incomplete tooth to the axially directly consecutive incomplete tooth rearward thereof. Thereby, each first cutting edge of the incomplete teeth cuts chips with the same thickness so that forces are equally distributed.

Preferably, the main pitch, the first pitch and the second pitch all are at least 0,79mm and at most 6,1 mm. A smaller pitch is difficult to produce and larger pitch is mostly only relevant for special tools. Preferably, the second pitch and the main pitch are equal. Preferably, the second pitch and the first pitch differ. For example, in right handed thread cutting tap with a right handed chip flute, and in a left handed thread cutting tap with a left handed chip flute, the first pitch is larger than the second pitch. For example, in a thread cutting tap where the handiness of the tap is opposite to the handiness of the chip flute, the first pitch is smaller than the second pitch. Preferably, the difference between the first pitch and the second pitch is at most 17% of the second pitch. It has been found that thereby forces are created which are suitable to counteract undesired pulling/pushing of the thread cutting tap during operation.

Optionally, each complete tooth, as seen in longitudinal cross sections of the thread cutting tap, is symmetrical or asymmetrical over a radius through a central point of the crest. Symmetry is for example achieved by the first flank edge and the second flank edge having the same inclination, and asymmetry by having different inclination.

Typically, each incomplete tooth, as seen in longitudinal cross sections, of the thread cutting tap, is asymmetrical over a radius in a position corresponding to a central position of an imaginary crest located according to the main pitch and dimensioned according to the crest of an complete tooth. Therein, both the first and the second flank edges optionally have the same or different inclination.

According to an embodiment, the first flank has a first clearance angle α, and the second flank has a second clearance angle β, wherein the first clearance angle α differs from the second clearance angle β. Thereby a clearance angle that is suitable for a flank edge which is cutting, and another clearance angel which is suitable for a flank edge which is guiding and supporting can be individually selected. Thanks to the inventive incomplete teeth that counteract pull/push, it is possible to use a sharper cutting edge that is easier cutting while still maintain dimensional accuracy of the thread being cut. Preferably, the first clearance angle α and the second clearance angle β both are at least 0,14° and at most 2,1°. Preferably, the first clearance angle α is at least 0,2° and at most 1,1°.

The clearance angle of the first and the second flanks are angles rotationally behind the respective first flank edge and second flank edge. The clearance angle may be measured in a side view toward the crest as an angle between an axial plane and the respective flank.

The chip flute is typically arranged in the peripheral, radially facing surface of the cutting section of the main body. Optionally, the chip flute is arranged parallel with the central longitudinal axis, inclined with respect to the central longitudinal axis, or along a curve, for example a helix curve around the central longitudinal axis. According to an embodiment, the helix angle of the helix curve is 25 - 60°, preferably 35 - 55°. Thanks to the inventive incomplete teeth that counteract pull/push, it is possible to use a helical chip flute with a large helix angle, which is advantageous for transporting chips rearward along the tool and still maintain dimensional accuracy of the thread being cut.

According to an embodiment, the thread cutting tap comprises at least two cutting units, for example two, three, four or five. Therein, each land is delimited by a rotationally leading and a rotationally trailing chip flute. Preferably, each of the set of teeth of each cutting unit extends from the trailing edge of the leading chip flute to the leading edge of the trailing chip flute. Preferably, the plurality of teeth of all the at least two cutting units are aligned in the direction of rotation and interrupted by the chip flutes. Thanks to there being several teeth in each turn, each cutting edge may cut at a smaller cutting depth. Another advantage is that cutting loads are more evenly distributed around the thread cutting tap, so that the tap is better balanced.

According to an embodiment, the crests of the complete teeth of all the at least two cutting units are arranged along a main helix curve, and the first flank edges of the plurality of incomplete teeth of all the at least two cutting units are arranged along a first helix curve, wherein the main helix curve and the first helix curve have different helix angles. This is efficient for grinding the first and second flanks of the incomplete and compete tooth. The second flanks of both the incomplete and complete tooth of all teeth of the thread cutting tap can be ground by following a common helix curve with the same helix angle as the main helix. The first flanks of the complete teeth are also ground by following a helix with same helix angle as the main helix. The first flank edges of the incomplete teeth are ground by following the first helix curve, which has a different helix angle. Thereby, the cutting and non-cutting edges are provided in an efficient manner. The values for the angles of the helixes correspond to the respective associated pitch.

Preferably, the first flank edges of the set of teeth of the at least two cutting units are aligned such that the main helix curve and the first helix curve coincide at the first flank edge of the most forward of the plurality of complete teeth of all the cutting units. This is efficient for grinding the first flanks such that the first axial distance decreases for each incomplete tooth axially rearward.

Optionally, the thread cutting tap comprises special teeth in addition to the set of teeth. For example, the cutting unit may have an axially most froward tooth that has a crest that runs out at the front end, so that an axially forward flank is lacking, and/or teeth with cutting edges at the front end which cut axially forward.

### Brief description of the drawings

In the following, example embodiments will be described in greater detail and with reference to the accompanying drawings, in which:
Fig. 1 is a perspective view of an example embodiment of the thread cutting tap according to the present invention;
Fig. 2 is an enlarged, longitudinal side view of a front end of the example embodiment shown in Fig. 1;
Fig. 3 is a further enlarged side view showing a portion of an incomplete tooth;
Fig. 4 is a schematic, longitudinal cross section the example embodiment;
Fig. 5 is a diagram of cutting edges of all cutting units of the example embodiment;
Figs. 6 is a schematic view showing a cross section of a thread groove that has been cut by the thread cutting tap.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

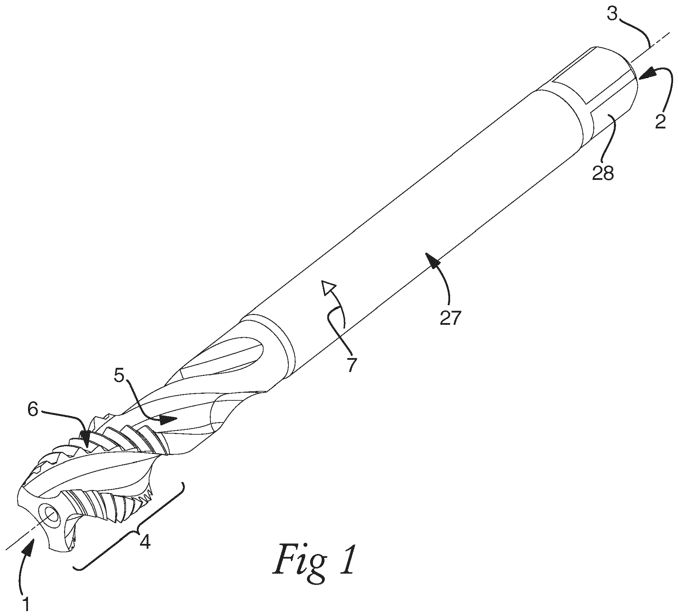

With reference to Figs. 1- 6, an example embodiment of a thread cutting tap according to the present invention is shown. The tap comprises an elongate main body with a front end 1, a rear end 2 and a central longitudinal axis 3 extending from the front end 1 to the rear end 2. The tap is configured to be rotatable around the axis 3 in a direction of rotation 7.

At the rear end 2, the tap comprises a shaft 27, which includes a coupling section 28 at a rear end thereof for providing a mounting interface. Thanks to mounting interface, the thread cutting tap is connectable to a rotatable spindle.

A cutting section 4 extends axially rearward from the front end 1. The cutting section 4 comprises three cutting units, which each comprises an axially extending chip flute 5 and an axially extending land 6. Each land 6 is delimited by a rotationally leading and a rotationally trailing chip flute 5. Since all three cutting units comprise the same or similar features, in the following only one cutting unit is described.

The cutting unit comprises a rotationally leading chip flute 5 and a rotationally trailing land 6. The chip flute is arranged in the peripheral, radially outward facing surface of the cutting section of the main body. The chip flute 5 follows a helix curve around the central longitudinal axis having a helix angle γ of 40°.

The cutting unit comprises a set of axially spaced teeth, which each is rotationally trailing the chip flute 5 and extends rotationally behind the trailing edge of the chip flute 5 across the land 6 and to the trailing end of the land 6. In the axial direction, the teeth are separated by grooves 9, in other words valleys, which extend in parallel with the teeth across the land. Each tooth comprises a crest 12, a first flank 11 facing in a first axial direction, and a second flank 13 facing in a second axial direction opposite to the first axial direction. Thus, the first flank 11 faces in one of axially forward and axially rearward directions, and the second flank 13 in the other axial direction. In the example embodiment, the first flank 11 faces axially rearward, and the second flank 13 faces axially forward. The crest 12 faces radially outward and connects to both the flanks 11, 13.

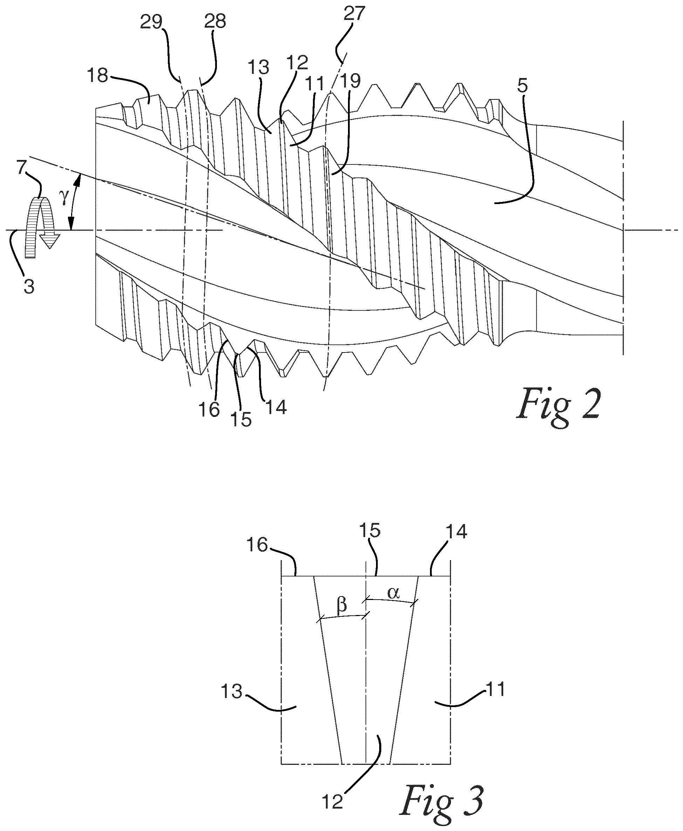

The crest 12 intersects the chip flute 5 with a crest edge 15, c.f. an adjacent cutting unit as shown in Fig. 2. The first flank 11 intersects the chip flute with a first flank edge 14, and the second flank 13 intersects the chip flute with a second flank edge 16.

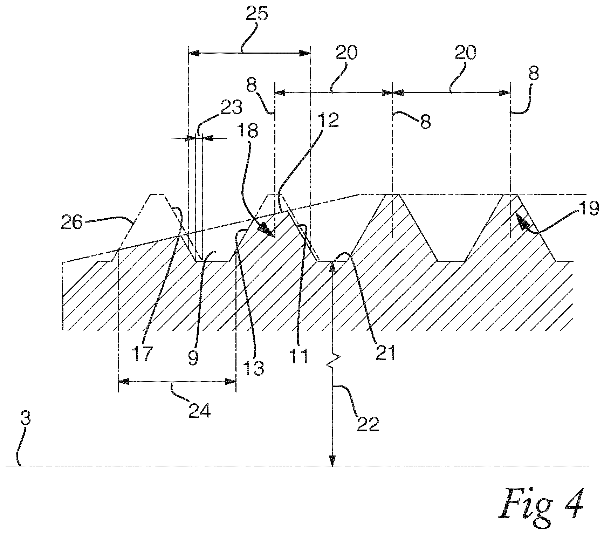

The set of teeth comprises a plurality of incomplete teeth 18 and complete teeth 19, wherein the complete teeth 19 are located axially rearward of the incomplete teeth 18. The described cutting unit of the example embodiment has two incomplete teeth as shown in Fig. 4. In the other two cutting units, the example embodiment has three incomplete teeth 18. The described cutting unit of the example embodiment has several complete teeth 19.

Each incomplete tooth 18 has a crest cutting edge formed by the entire crest edge 15, a first flank cutting edge formed by the entire first flank edge 14, and a second flank non-cutting edge formed by the entire second flank edge 16. The crest cutting edge of an incomplete tooth 18 is located further radially outward the further axially rearward the incomplete tooth 18 in question is located, and is inclined axially forward. Thereby, the incomplete teeth 18 together form a chamfer of the cutting section 4. The crest cutting edge extends over the crest and a corner region radially inwards along the flank edges 14, 16 a small distance corresponding to a radial cutting depth.

In the described cutting unit, a single axially most forward complete tooth 19 has cutting edges, which in the present example are in form of a crest cutting edge, and first flank cutting edge 14. All the other complete teeth 19 have non-cutting edges only. The complete teeth 19 have identical dimension and shape, and are spaced at a constant main pitch 20. In the example embodiment the main pitch is 1,75mm.

Imaginary complete teeth are shown by a dashed line in Fig. 4. The imaginary complete teeth are placed in positions axially forward of the complete teeth 19 according to the main pitch 20. The dimensions and shape of the imaginary complete teeth are equal to the dimensions and shape of the complete teeth 19. The imaginary complete teeth each have an imaginary first flank edge 17. The imaginary first flank 17 corresponds to the flank of a groove cut according to the maximum dimensions possible with the thread cutting tap, wherein the maximum dimensions are set by the shape and dimensions of the complete teeth 19. The first flank cutting edge 14 of each incomplete tooth 18 has a first axial distance 23 to a closest one of the imaginary first flank edges 17. The first axial distance 23 decreases for each consecutive incomplete tooth 18 axially rearward. In other words, the further axially rearward an incomplete tooth 18 is located, the closer the first flank cutting edge 14 is located to the corresponding imaginary first flank edge 17.

As seen in longitudinal cross sections of the thread cutting tap, the complete teeth 19 are symmetrical. Specifically, the first and second flanks edges 14, 16 are symmetrical with respect to a radius 8 through a center of the crest edge 15. In contrast, each incomplete tooth 18, as seen in longitudinal cross sections of the thread cutting tap, is asymmetrical with respect to a radius 8 in a corresponding position, i.e. in a central position of the crest edge 15 of the imaginary complete tooth. Therein, the second flank edge 16 is located in the same position as, and a portion thereof coincides with, an imaginary second flank 26 of the imaginary complete tooth. Thus, the first flank edge 14 and second flank edge 16 have different distances to the radius 8. In the example embodiment, both the first and the second flank edges 14, 16 have the same inclination.

The first flank edge 14 of each incomplete tooth 18 are spaced at a constant first pitch 25. In the example embodiment, the first pitch is 1,77mm. Thereby the first flank edge 14 of each incomplete tooth 18 is 0,02mm further away from to the imaginary first cutting edge than a first flank edge 14 of an axially directly rearward tooth 18, 19.

The second flank edges 16 of each respective incomplete tooth 18 are axially spaced at a constant second pitch 24. The second pitch 14 is equal to the main pitch and in the example embodiment 1,75mm. Thereby the non-cutting second flank edges of both the incomplete and complete teeth have the same pitch. The second flank edges 16 of the incomplete teeth form a portion of a second imaginary flank of the imaginary complete teeth.

The first flank 11 has a first clearance angle α and the second flank 13 has a second clearance angle β, wherein the first clearance angle α differs from the second clearance angle β. In the example embodiment, the first clearance angle α is 0,6° and the second clearance angle β is 0,3°.

A root surface 21 connects a respective first flank 11 with a respective second flank 13 of two axially directly consecutive teeth 18, 19 of the set. The root surface 21 has a radial distance 22 to the central longitudinal axis 3, which is equal for all root surfaces 21. Thus, the root surface 21 between two directly axially consecutive teeth is the same for two consecutive teeth comprising incomplete teeth 18, complete teeth 19 or one of each.

The crests 12 of the set of teeth of all the three cutting units of the described example embodiment are aligned in the direction of rotation 7 and interrupted by the chip flutes 5. The crests 12 of the complete teeth 19 of all the three cutting units follow a main helix curve 27. The first flank edges 14 of the incomplete teeth 18 of all the three cutting units are arranged along a first helix curve 28. The main helix curve 27 and the first helix curve 28 have different helix angles. The second flank edges 16 of both the incomplete teeth 18 and the complete teeth 19 are arranged along a common second helix curve 29. Thus, the second helix curve 29 has the same helix angle as the main helix curve 27.

The first flank edges 14 of the teeth of all the three cutting units are arranged such that the first helix curve 28 of the first flank edges 14 of the incomplete teeth 18 coincides with the helix curve of the first flank edges of the complete teeth 19 at an axially most forward complete tooth 19.

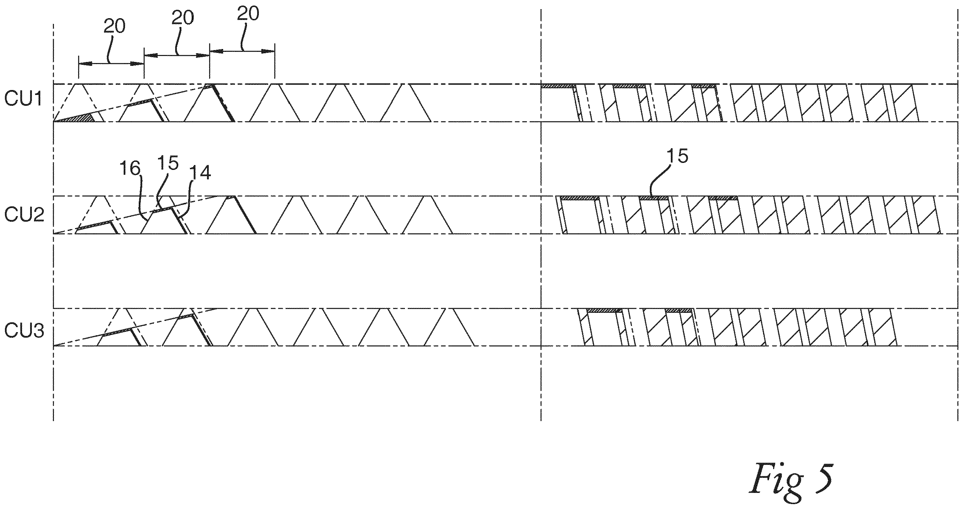

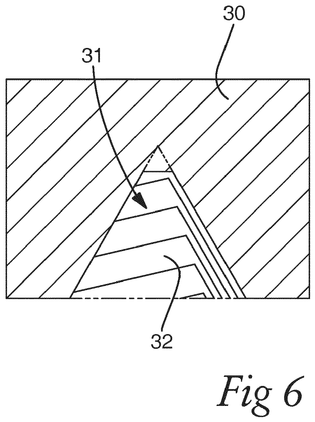

With reference to the diagrams of Figs. 5 and 6, an example method for how to operate the thread cutting tap according to the example embodiment is described. In the example, the tap is operated to form an internal thread in a hole that has been pre-drilled in a metal workpiece 30 by another tool. In Fig. 6 a cross section of a thread groove 31 that has been cut into the workpiece 30 to the maximum dimensions by the thread cutting tap according to the example embodiment is shown. In Fig. 5 a diagram of the plurality of incomplete teeth 18 and a few of the plurality of complete teeth 19 of each the cutting units CU1, CU2, CU3 are shown in a side view to the left and in a top view to the right. Cutting edges are shown by a bold line, wherein the first flank cutting edges 14 only are visible in the side view to the left in Fig. 5. Imaginary complete teeth are shown by dashed lines.

First, the tap is inserted into the opening of the hole with the central longitudinal axis aligned with a central longitudinal axis of the hole. The tap is rotated in the direction of rotation 7, which is the direction of rotation for cutting, and at the same time, the tap is advanced axially forward. A most forward incomplete tooth 18 is located in a first CU1 of the three cutting units, and cuts a first layer 32 of a thread groove 31 that is to be cut in the pre-drilled hole. The first layer 32 can be seen as the bottom triangle in Fig. 6, wherein the first layer is cut by a crest cutting edge 15 of the forwardmost incomplete tooth as shown in the top left position of the two diagrams of Fig. 5.

As the tap is further rotated and advanced, the forward most teeth of the following cutting units CU 2 and CU 3 engage the workpiece and remove consecutive layers in the thread groove that is being cut. Thereafter follow, one after another, the incomplete teeth 18 of the three cutting units CU1, CU2, CU3 as shown in Fig. 5. As can be seen, each incomplete tooth 18 has a crest edge 15 in form of a cutting edge and a first flank edge 14 in form of a cutting edge, while the second flank edge 16 is non-cutting. The layers 32 cut by one respective incomplete tooth 18 can be seen in Fig. 6, wherein, for clarity, only the layer 32 removed by every second incomplete tooth 18 is shown.

In case the hole that is to be provided with the thread is deeper than the chamfer formed by the incomplete teeth 18, complete teeth 19 will follow behind the incomplete teeth 18 in the groove that has been cut to the maximal dimension. The complete teeth function as support and guidance for the thread cutting tap so that the incomplete teeth 18 are properly centered around the central axis of the hole. Thanks to the inventive cutting first flank edge 14 of the incomplete teeth 18, the tap is less prone to be pulled into the hole so that the dimensional accuracy of the cut thread is increased.

Finally, the tap is rotated in the reverse direction and removed from the workpiece.

## Claims

1. A thread cutting tap for metal cutting, comprising an elongate main body, which
- has a front end (1), a rear end (2) and a central longitudinal axis (3) extending from the front end (1) to the rear end (2),
- is configured rotatable in a direction of rotation (7) around the central longitudinal axis (3), and
- comprises a cutting section (4) which extends axially rearward from the front end (1),
wherein the cutting section (4) comprises a cutting unit, which comprises
- an axially extending chip flute (5),
- an axially extending land (6), which, in the rotational direction (7) connects to and is trailing the chip flute (5), and
- a set of axially spaced teeth, wherein each tooth of the set extends from the chip flute (5) rotationally rearward across the land (6), and comprises
- a first flank (11) facing in a first axial direction, which first flank (11) intersects the chip flute (5) with a first flank edge (14),
- a second flank (13) facing in a second axial direction opposite to the first axial direction, which second flank (13) intersects the chip flute (5) with a second flank edge (16),
- a radially outward facing crest (12), which crest (12) connects to both the flanks (11, 13) and intersects the chip flute (5) with a crest edge (15),
wherein the set of teeth comprises
- a plurality of incomplete teeth (18) which each has a crest cutting edge (15) formed by at least a portion of the crest edge,
**characterized in that**
each incomplete tooth (18) of the plurality of incomplete teeth (18) comprises
- a first flank cutting edge formed by at least a portion of the first flank edge (14), and
- a second flank non-cutting edge formed by the entire second flank edge (16).

2. The thread cutting tap as claimed in claim 1, wherein axially rearward of the plurality of incomplete teeth (18), the set of teeth comprises a plurality of complete teeth (19) spaced at a constant main pitch (20).

3. The thread cutting tap as claimed in any preceding claim, wherein
- axially between each two axially directly consecutive teeth of the set, a root surface (21) connects a respective first flank (11) with a respective second flank (13) of the two axially directly consecutive teeth (18, 19), which root surface (21) has a radial distance (22) to the central longitudinal axis (3),
- the radial distance (22) of the root surface (21) between each two axially consecutive teeth (18, 19), which comprises at least one incomplete tooth (18), is equal.

4. The thread cutting tap as claimed claim 2 and 3, wherein the radial distance (22) of the root surface (21) axially between at least two axially directly consecutive complete teeth (19) is the equal radial distance (22).

5. The thread cutting tap as claimed in any preceding claim, wherein the second flank edges (16) of each respective incomplete tooth (18) are axially spaced at a constant second pitch (24).

6. The thread cutting tap as claimed in claim 2 and 5, wherein the second pitch (24) is equal to the main pitch (20).

7. The thread cutting tap as claimed in claim 6, wherein
- the first flank edge (14) of each incomplete tooth (19) has a first axial distance (23) to an imaginary closest one of imaginary first flank edges (17), wherein the imaginary first flank edges (17) are located in positions, spaced according to the main pitch (20), axially forward from the first flank edges (14) of the complete teeth (19),
- wherein the first axial distance decreases (23) for each consecutive incomplete tooth (18) axially rearward.

8. The thread cutting tap as claimed in claim 7, wherein the first flank edge (14) of each incomplete tooth (18) is spaced at a constant first pitch (25).

9. The thread cutting tap as claimed in any preceding claim 8, wherein the difference between the first pitch (25) and the second pitch (24) is at most 17% of the second pitch (24).

10. The thread cutting tap as claimed in any preceding claim, wherein the first flank (11) a first clearance angle α and the second flank has a second clearance angle β, wherein the first clearance angle α differs from the second clearance angle β.

11. The thread cutting tap as claimed in claim 10, wherein the first clearance angle is 0,2 - 1,1°.

12. The thread cutting tap as claimed in any preceding claim, wherein the first flank (11) faces axially forward.

13. The thread cutting tap as claimed in any claim 1 - 11, wherein the first flank (11) faces axially rearward.

14. The thread cutting tap as claimed in any preceding claim, wherein the chip flute (5) follows a flute helix curve with a helix angle of 35 - 55°.

15. The thread cutting tap as claimed in claim 2, wherein the thread cutting tap comprises at least two cutting units, wherein the plurality of teeth of all the at least two cutting units are aligned in the direction of rotation (7) and interrupted by the chip flutes (5), wherein
- the crest edges (15) of the plurality of complete teeth (19) of all the at least two cutting units are arranged along a main helix curve (27),
- the first flank edges (14) of the plurality of incomplete teeth (18) of all the at least two cutting units are arranged along a first helix curve (28), and wherein
- the main helix curve (27) and the first helix curve (28) have different helix angles.

16. The thread cutting tap as claimed in claim 15, wherein the first flank edges (14) of the teeth of all the three cutting units are arranged such that the first helix curve (28) of the first flank edges (14) of the incomplete teeth (18) coincides with the helix curve of the first flank edges (14) of the complete teeth (19) at an axially most forward complete tooth (19) of the plurality of complete teeth of all the at least two cutting units.
